# EUROPÄISCHE PATENTSCHRIFT

(11) **EP 0 885 799 B1**
(45) Veröffentlichungstag und Bekanntmachung des Hinweises auf die Patenterteilung: **12.06.2002**
(21) Anmeldenummer: 98107111.1
(22) Anmeldetag: 18.04.1998
(51) Int. Cl.: B62D 35/00

(54) **Luftleiteinrichtung**
Air guide device
Dispositif de guidage d'air

(30) Priorität: 20.06.1997 DE 19727685
(43) Veröffentlichungstag der Anmeldung: 23.12.1998
(73) Patentinhaber: Dr.Ing.h.c. F. Porsche Aktiengesellschaft, 70435 Stuttgart (DE)
(72) Erfinder: Möbius, Wolfgang, 71701 Schwieberdingen (DE); Kulla, Matthias, 71229 Leonberg (DE)

(56) Entgegenhaltungen:
- DE-A- 3 538 253
- DE-A- 4 441 592
- GB-A- 2 142 287

## Beschreibung

Die Erfindung bezieht sich auf eine Luftleiteinrichtung nach dem Oberbegriff des Anspruchs 1.

Aus der DE 44 41 592 A1 ist eine derartige Luftleiteinrichtung bekannt, bei der zwischen Seitenwangen ein oberer Flügel und ein hierzu beabstandeter Spoiler angeordnet ist. Die Seitenwangen begrenzen einen zwischen dem Flügel und dem Spoiler gebildeten Luftspalt. Desweiteren ist aus der GB 2 142 287 A eine Flügel-Spoiler-Kombination bekannt, bei dem die Verbindung des obenliegenden Flügels mit dem untenliegenden Spoiler über eine dreieckförmige Säule erfolgt, die am Fahrzeug anliegend ist. Die bekannten Flügel-Spoiler-Kombinationen sind derart angeordnet, daß sich zwischen der Heckscheibe und dem obenliegenden Flügel ein von Luft durchströmter Spalt bildet und die Luftströmung sich durch den Spalt hindurchbewegt und vom Spoiler umgeleitet wird.

Aufgabe der Erfindung ist es, eine Luftleiteinrichtung zu schaffen, die durch eine verbesserte Bodenhaftung eines Fahrzeuges mittels einer durch Luftströmung erzeugten Abtriebskraft ein optimales Fahrverhalten, insbesondere bei hohen Geschwindigkeiten, bewirkt.

Diese Aufgabe wird erfindungsgemäß durch die Merkmale des Anspruchs 1 gelöst. Weitere vorteilhafte Merkmale beinhalten die Unteransprüche.

Die mit der Erfindung hauptsächlich erzielten Vorteile bestehen darin, daß neben der verbesserten Bodenhaftung noch eine optimierte Aerodynamik erzielt wird, d. h. daß durch die Luftleiteinrichtung der Luftwiderstandsbeiwert noch herabgesetzt wird und die Luftströmung die Einrichtung ohne wesentliche nachteiligen Luftwirbelbildungen umströmen bzw. durchströmen kann.

Hierzu sind die Flügel der Luftleiteinrichtung über Abschlußwangen mit einer schnabelförmigen Öffnung gem. Anspruch 2 verbunden, so daß die Luft sowohl außenseitig über schräg angestellte Flächen gem. Anspruch 2 als auch über innenseitige Luftleitflächen an den Wangen ohne einen wesentlichen Luftwiderstand die Flügel durchströmen kann.

Damit die Luftströmung vom Dach über das Heck des Fahrzeugs kommend zwischen den Flügeln ohne wesentliche Verwirbelungen eintreten kann, ist die Vorderkante des oberen Flügels nach hinten hin - in Fahrtrichtung gesehen - ausgerundet.

Das obere Flügelelement weist zur Erzielung eines Abtriebs an der Außenoberfläche eine nach innen gerichtete Wölbung in Längsrichtung auf, wobei die Innenfläche eine nach außen gerichtete größere Wölbung besitzt, die gem. Anspruch 5 einer annähernd ebenen Flügelinnenfläche des unteren Flügelelements zugerichtet ist.

Die Durchströmöffnung zwischen den beiden Flügelelementen ist gem. Anspruch 7 annähernd trapezförmig gestaltet und so ausgelegt, daß die Luftströmung vom Dach und einem Bereich der Seitenflächen ohne Unterbrechnung durch den Luftspalt geleitet werden kann. Wesentlich bei der Gestaltung der Flügelelemente sowie des Luftspaltes und der Abschlußwangen ist, daß ein Kompromiß zwischen einem optimal wirkenden Abtrieb und einer vertretbaren Luftwiderstandskraft der Luftleiteinrichtung getroffen wird.

Damit eine zügige Montage und Demontage der Luftleiteinrichtung am Fahrzeug durchgeführt werden kann, ist diese mit dem Heckdeckel des Fahrzeugs fest verbunden.

Ein Ausführungsbeispiel der Erfindung ist in den Zeichnungen dargestellt und wird im folgenden näher beschrieben.
Es zeigen
- Fig. 1: eine Ansicht auf die Luftleiteinrichtung von hinten in Fahrrichtung F gesehen,
- Fig. 2: eine Seitenansicht auf die Luftleiteinrichtung mit zwei Flügelelementen und Abschlußwangen,
- Fig. 3: eine schaubildliche Darstellung der Luftleiteinrichtung und
- Fig. 4: eine Draufsicht auf die Luftleiteinrichtung.

Die Luftleiteinrichtung 1 umfaßt im wesentlichen zwei beabstandet zueinander angeordnete Flügelelemente 2, 3, die über endseitige Abschlußwangen 4, 5 miteinander verbunden sind. Zwischen den beiden Flügelelementen 2, 3 und den Abschlußwangen 4, 5 bildet sich ein Luftspalt 6.

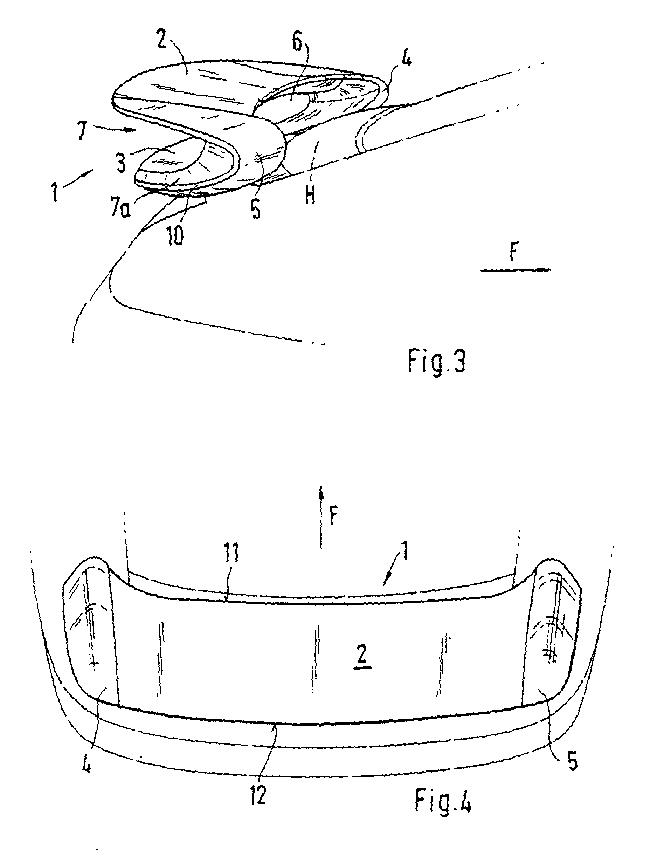

Die Abschlußwangen 4, 5 sind als aerodynamische Formkörper U-förmig ausgebildet und weisen, in einer Seitenansicht gem. Fig. 3 gesehen, eine schnabelförmige Öffnung 7 auf, deren Luftleitfläche 7a in die obere und untere Innenfläche 15, 16 der Flügelelemente 2, 3 einlaufen.

Die Luftleitfläche 7a der Abschlußwangen 4, 5 verlaufen von den Innenflächen 15, 16 der Flügelelemente 2, 3 zur Außenseite hin annähernd schräg nach außen in Fahrtrichtung F und enden in einer Begrenzungskante 10.

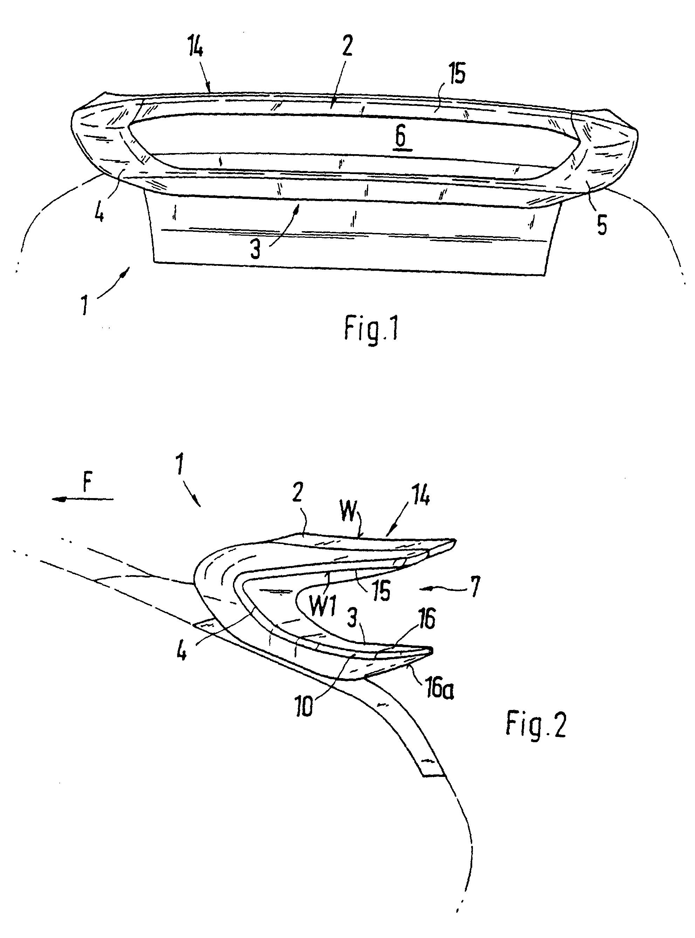

Das obere Flügelelement 2 weist eine bogenförmige obere Begrenzungskante 11 auf, die etwa parallel verlaufend zu einer hinteren Begrenzungskante 12 angeordnet ist. Die Außenfläche 14 des Elements 2 weist, im Querschnitt gesehen (Fig. 2), eine nach innen gerichtete Wölbung W auf. Die Innenfläche 15 ist dagegen mit einer größeren nach außen gerichteten Wölbung W1, im Querschnitt gesehen, ausgebildet.

Dieser Wölbung W1 des oberen Flügelelementes 2 zugerichtet, ist die Innenfläche 16 des unteren Flügelelements 3, welche eine annähernd ebene Fläche F im Bereich der Fahrzeuglängsachse aufweist.

Wie in Fig. 1 näher dargestellt sind die Flügelelemente 2, 3 sowie die seitlichen Abschlußwangen 4, 5 so gestaltet, daß sich ein etwa trapezförmiger Luftspalt 6 in Fahrzeugquerrichtung ergibt.

Die Außenfläche 16a des unteren Flügelelements 3 bildet mit der Innenfläche 16 sowie dem Heckdeckel H im Querschnitt annähernd eine Dreieckform, was in Fig. 2 näher dargestellt ist. Insbesondere ist diese Dreieckförmigkeit in Längsmitte des Fahrzeugs vorhanden.

Die Luftleiteinrichtung 1, im wesentlichen bestehend aus den beiden Flügelelementen 2, 3 und den Abschlußwangen 4, 5 ist mit dem Heckdeckel H als Montageeinheit fest verbunden, d.h. daß die Luftleiteinrichtung vor der Montage am Heckdeckel H festgelegt wird.

## Patentansprüche

1. Luftleiteinrichtung zur Verbesserung einer Bodenhaftung eines Fahrzeugs, mit einem vom Fahrtwind angeströmten, etwa in Querrichtung verlaufenden und eine Abtriebskraft erzeugenden Flügel, der am Fahrzeug abgestützt ist, wobei der Flügel (1) ein sich quer zum Fahrzeug erstreckendes, oberes und unteres Flügelelement (2, 3) umfaßt, die beabstandet zueinander angeordnet sind und über endseitig angeordnete und im Querschnitt etwa U-förmig gestaltete Abschlußwangen (4, 5) miteinander verbunden sind und ein von den beiden Flügelelementen (2, 3) und den Abschlußwangen (4, 5) begrenzter und von Luft durchströmter Spalt (6) gebildet wird und die Abschlußwangen (4, 5) der Flügelelemente (2, 3) - in einer Seitenansicht gesehen - eine nach hinten entgegen der Fahrtrichtung (F) ausgerichtete schnabelförmige Öffnung (7) aufweisen, deren äussere Luftleitflächen (7a) in die obere und untere Innenfläche (15, 16) der Flügelelemente (2, 3) einlaufen, **dadurch gekennzeichnet, daß** die Luftleitflächen (7a) der Abschlußwangen (4, 5) einen von den Innenflächen (15, 16) der Flügelelemente (2, 3) zur Außenseite hin annähernd schräg nach außen in Fahrtrichtung (F) gerichteten Verlauf aufweisen und die Flächen jeweils in einer äußeren Begrenzungskante (10) der Abschlußwangen (4, 5) enden.

2. Luftleiteinrichtung nach Anspruch 1, **dadurch gekennzeichnet, daß** das obere Flügelelement (2) eine Außenfläche (14) mit einer nach innen gerichteten Wölbung (W) aufweist und die Innenfläche (15) eine größere nach außen gerichtete Wölbung (W1) besitzt, die einer annähernd ebenen Fläche (F) des unteren Flügelelements (3) zugerichtet ist.

## Claims

1. An air-guide device for improving the road grip of a vehicle, with a vane against which the air stream flows and which extends substantially in the transverse direction and produces a negative-lift force and which is supported on the vehicle, wherein the vane (1) comprises an upper and a lower vane member (2, 3), which members extend transversely to the vehicle and which are arranged spaced from each other and are connected to each other by way of closure pieces (4, 5) arranged at the ends and substantially U-shaped in cross-section, and a gap (6) bounded by the two vane members (2, 3) and the closure pieces (4, 5) and traversed by air is formed, and the closure pieces (4, 5) of the vane members (2, 3) have a beak-shaped opening (7) which is directed towards the rear - as seen in a lateral view - contrary to the direction of travel (**F**) and the outer air-guide faces (7a) of which run into the upper and lower inner faces (15, 16) of the vane members (2, 3), **characterized in that** the air-guide faces (7a) of the closure pieces (4, 5) have a shape directed substantially obliquely outwards in the direction of travel (**F**) from the inner faces (15, 16) of the vane members (2, 3) towards the outside, and the faces each terminate in an outer boundary edge (10) of the closure pieces (4, 5).

2. An air-guide device according to Claim 1, **characterized in that** the upper vane member (2) has an outer face (14) with a bulge (**W**) directed inwards, and the inner face (15) has a larger bulge (**W1**) which is directed outwards and which is directed towards a substantially flat face (**F**) of the lower vane member (3).

## Revendications

1. Dispositif de guidage d'air pour améliorer l'adhérence au sol d'un véhicule, comportant un aileron sur lequel parvient le vent provoqué par la marche, qui s'étend dans la direction transversale et qui produit une force de poussée négative, et qui est supporté par le véhicule, l'aileron (1) comprenant un élément d'aileron supérieur (2) et un élément d'aileron inférieur (3) s'étendant transversalement au véhicule, qui sont disposés à distance l'un de l'autre et qui sont reliés entre eux par des joues de terminaison (4, 5) disposées aux extrémités et dont la section est à peu près en U, et une fente (6), délimitée par les deux éléments d'aileron (2, 3) et les joues de terminaison (4, 5) et traversée par l'air, étant formée, et les joues de terminaison (4, 5) des éléments d'aileron (2, 3) présentant - vus de côté - une ouverture (7) en queue d'aronde orientée vers l'arrière dans le sens opposé au sens de marche (F), dont les surfaces de guidage d'air extérieures (7a) se terminent dans la surface intérieure supérieure (15) et la surface intérieure inférieure (16) des éléments d'aileron (2, 3), **caractérisé en ce que** les surfaces de guidage d'air (7a) des joues de terminaison (4, 5) présentent un parcours, depuis les surfaces intérieures (15, 16) des éléments d'aileron (3) vers l'extérieur, dirigé approximativement obliquement vers l'extérieur dans le sens de marche (F), et **en ce que** les surfaces se terminent chacune dans un bord de délimitation extérieur (10) des joues de terminaison (4, 5).

2. Dispositif de guidage d'air selon la revendication 1, **caractérisé en ce que** l'élément d'aileron supérieur (2) présente une surface extérieure (14) avec une courbure (W) dirigée vers l'intérieur, et la surface intérieure (15) possède une courbure (W1) plus grande dirigée vers l'extérieur, qui est tournée vers une surface (F) approximativement plane de l'élément d'aileron inférieur (3).
